## Europäisches Patentamt

## European Patent Office

## Office européen des brevets

(11) Veröffentlichungsnummer: **0 050 808**

**A1**

(12) # EUROPÄISCHE PATENTANMELDUNG

(21) Anmeldenummer: **81108400.3**

(22) Anmeldetag: **16.10.81**

(51) Int. Cl.³: **B 60 T 13/22**

(30) Priorität: **24.10.80 US 200233**

(43) Veröffentlichungstag der Anmeldung:
**05.05.82 Patentblatt 82/18**

(84) Benannte Vertragsstaaten:
**AT BE CH DE FR GB IT LI NL SE**

(71) Anmelder: **DEERE & COMPANY**
**1 John Deere Road**
**Moline Illinois 61265(US)**

(72) Erfinder: **Kass, John Joseph**
**1320 Oeth Ct.**
**Dubuque Iowa 52001(US)**

(72) Erfinder: **Coleman, David LeRoy**
**2030 Lombard Street**
**Dubuque Iowa 52001(US)**

(74) Vertreter: **Gramm, Werner, Dipl.-Ing. et al,**
**Patentanwälte Gramm + Lins Theodor-Heuss-Strasse 2**
**D-3300 Braunschweig(DE)**

(54) **Steuerventil.**

(57) Die Erfindung betrifft ein wegabhängiges Steuerventil (77) insbesondere zur Steuerung einer Bandbremse. Die Kolbenstange (65) eines Hydraulikzylinders (63) ist gegen die Wirkung einer Feder (95) verschiebbar und mit einem Steuergestänge (45) verbunden, das eine Bandbremse (11) beaufschlagt. Das Steuerventil (77) umfaßt einen Steuerschieber (97), dessen Stellung innerhalb des Ventils bestimmt wird durch ein Kräftegleichgewicht zwischen einem Drucksignal und einer Federkraft. Letztere variiert in Abhängigkeit von der Zylinderbetätigung. Durch Steuerung der Stellung des Steuerschiebers (97) kann Druckflüssigkeit in steuerbarer Menge in den Hydraulikzylinder (63) eintreten bzw. aus ihm herausfließen und zwar dergestalt, daß die Betätigung des Hydraulikzylinders (63) abhängig ist von den Veränderungen des genannten Drucksignals.

FIG. 2

# Patentanwälte GRAMM + LINS

Dipl.-Ing. Prof. Werner Gramm
Dipl.-Phys. Jürgen Lins

**0050808**

D-3300 Braunschweig

DEERE & COMPANY

Moline, Illinois 61265

U S A

Telefon: (05 31) 8 00 79
Telex: 09 52 620

Anwaltsakte 324-25 EP-1
Datum 15.10.1981

"Steuerventil"

Die Erfindung betrifft ein wegabhängiges Steuerventil in Kombination mit einem Hydraulikzylinder.

Insbesondere betrifft die Erfindung ein Steuerventil zur Betätigung einer Bandbremse.

Steuergestänge zur Betätigung von Bandbremsen sind bekannt. Diese Steuergestänge sind so ausgelegt, daß in gelöster Bremsstellung das Bremsband einen lichten Abstand von der Bremstrommel aufweist, und daß bei Beaufschlagung des Steuergestänges das Bremsband zusammengezogen wird und dadurch die Bremstrommel mit variabler Kraft abbremst.

Zur Beaufschlagung des Steuergestänges kann ein Hydraulikzylinder dienen, dessen Kolbenstange gegen die Wirkung einer Feder verschiebbar und mit dem genannten Steuergestänge verbunden ist und so durch seine Verschiebung das Steuergestänge beaufschlagt, also von seiner gelösten Bremsstellung in seine angezogene Bremsstellung verschwenkt. Die Betätigung der Kolbenstange erfolgt über eine unter hohem Druck stehende Hydraulikflüssigkeit. Dabei kann sich ein Problem hinsichtlich der Abstimmung der Zylinderbetätigung mit der Betätigung eines Fahrzeugbremspedals ergeben. Dieses Problem tritt insbesondere bei Raupenschleppern

- 2 -

o.dgl. auf, bei denen das Bremssystem gleichzeitig auch zur Lenkung des Fahrzeuges dient.

Der Erfindung liegt die Aufgabe zugrunde, ein wegabhängiges Steuerventil zu entwickeln, das in Abhängigkeit von einem Steuersignal den jeweiligen Verschiebeweg eines federbelasteten Kolbens eines Hydraulikzylinders steuert. Dabei soll sich dieses Steuerventil vor allem für ein Fahrzeugbremssystem zur Steuerung einer Bandbremse eignen.

Diese Aufgabe wird gemäß der Erfindung durch folgende Merkmale gelöst:

a) Durch einen im Steuerventil verschiebbar angeordneten Steuerschieber wird eine Strömungsverbindung ganz oder teilweise hergestellt bzw. unterbunden zwischen einem Anschluß am Hydraulikzylinder und einem Druckeinlaß oder aber mit einem Ölsumpfanschluß am Steuerventil;

b) eine erste Verstelleinrichtung beaufschlagt den Steuerschieber in einer Richtung mit einer wählbaren Kraft;

c) eine zweite Verstelleinrichtung beaufschlagt den Steuerschieber mit einer der ersten Verstelleinrichtung entgegengerichteten Kraft, deren Größe von der jeweiligen Verschiebestellung der Kolbenstange des Hydraulikzylinders abhängig ist.

Die jeweilige Stellung des Steuerschiebers ist somit abhängig von dem jeweiligen Kräftegleichgewicht zwischen den beiden auf den Steuerschieber einwirkenden Verstelleinrichtungen, wobei die erste Verstelleinrichtung einen Druck auf das eine Ende des Steuerschiebers übermitteln kann, der dann im Gleichgewicht steht mit der auf den Kolben des Hydraulikzylinders wirkenden

- 3 -

Federkraft, die ihrerseits wiederum abhängig ist von der Verschiebestellung des Kolbens.

In einer zweckmäßigen Ausführungsform kann die zweite Verstelleinrichtung aus folgenden Merkmalen bestehen:

a) Ein parallel zur Kolbenstange des Hydraulikzylinders angeordneter Stößel liegt an einem der ersten Verstelleinrichtung gegenüberliegenden Ende des Steuerschiebers an;

b) der Stößel ist längsverschieblich geführt in einem Bolzen, der angenähert rechtwinklig mit der Kolbenstange des Hydraulikzylinders verbunden ist;

c) auf dem Stößel ist ein Anschlag vorgesehen;

d) der Stößel ist von einer Feder umschlossen, die sich zwischen dem genannten Bolzen und dem genannten Anschlag abstützt.

Wird das neue Steuerventil in einem Fahrzeugbremssystem der eingangs erläuterten Art eingesetzt, dann ist es zweckmäßig, wenn die Kolbenstange des Hydraulikzylinders gegen die Wirkung einer Feder verschiebbar und mit einem Steuergestänge verbunden ist, das eine Bandbremse beaufschlagt, wobei das Steuergestänge in seiner gelösten Bremsstellung die beiden Enden eines eine Bremstrommel umschlingenden Bremsbandes so weit voneinander entfernt hält, daß das Bremsband von der Bremstrommel abhebt, während das Steuergestänge in seiner angezogenen Bremsstellung die Enden des Bremsbandes dichter zusammenzieht.

- 4 -

- 4 -

In der Zeichnung ist eine als Beispiel dienende Ausführungsform
der Erfindung dargestellt. Es zeigen:

Figur 1    in Seitenansicht eine Bandbremse mit einem von
           einem Steuerventil gesteuerten Hydraulikzylinder
           und

Figur 2    in vergrößertem Maßstab den in Figur 1 dargestellten Hydraulikzylinder nebst Steuerventil um 90°
           um seine Längsachse gedreht und im Längsschnitt.

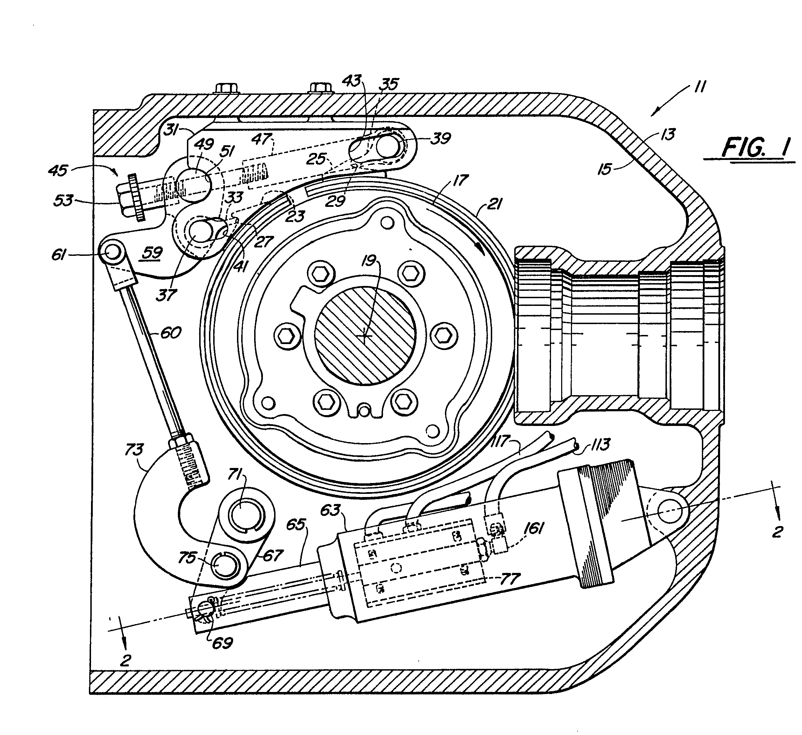

In Figur 1 ist die gesamte Bremsanordnung mit dem Bezugszeichen 11
gekennzeichnet. Sie besteht aus einem Gehäuse 13, in dessen Innenraum 15 eine Bremstrommel 17 angeordnet ist, die um eine
Achse 19 beidseitig drehbar ist, wobei die Vorwärtsrichtung der
Rotation in Uhrzeigerrichtung sein soll, wie es in Figur 1 durch
einen Pfeil dargestellt ist. Die Bremstrommel 17 wird von einem
Bremsband 21 umschlungen, dessen einen Abstand voneinander aufweisenden Bremsbandenden 23,25 Schlaufen 27,29 bilden. In der
Darstellung befindet sich das Bremsband in seiner gelösten Stellung, weist also von der Bremstrommel einen lichten Abstand auf.
Die Bremsbandenden 23,25 liegen zwischen den Schenkeln einer im
Querschnitt angenähert U-förmig ausgebildeten Halterung 31.
Zwischen den U-Schenkeln der Halterung 31 erstrecken sich keilförmige Spannstücke 33,35, die mit abgerundeten Enden in die
Schlaufen 27,29 der Bremsbandenden 23,25 eingreifen und verschwenkbar an ersten und zweiten Ankerzapfen 37,39 befestigt
sind deren Enden in Schlitzführungen 41,43 in den U-Schenkeln der
Halterung 31 geführt sind. Die Spannstücke 33,35 können sich somit auf Wegen verschieben, die an einem Punkt zusammenlaufen,
der radial außerhalb der Bremstrommelachse 19 und etwa mittig
zwischen den Bremsbandenden 23,25 liegt.

- 5 -

- 5 -

Zur Verschiebung der Ankerzapfen 37,39 dient ein Steuergestänge 45, das aus einem Übertragungsglied 47 besteht, das zwischen den U-Schenkeln der Halterung 31 liegt und mit seinem bügelähnlichen rechten Ende am Ankerzapfen 39 angelenkt ist, während sein stangenähnliches linkes Ende längsverschiebbar in einer Querbohrung eines dritten Ankerzapfens 49 geführt ist. Letzterer liegt parallel zur Bremstrommelachse 19 und ist in einer Stellung dargestellt, in der er gegen Lagerflächen 51 in den U-Schenkeln der Halterung 31 radial außerhalb der Schlitzführungen 43 anliegt. Auf das linke Ende des Übertragungsgliedes 47 ist eine Justiermutter 53 aufgeschraubt. Ein Winkelhebel 59 ist mit seinem bügelförmigen rechten Ende teilweise zwischen den U-Schenkeln der Halterung 31 gelagert und umgreift schwenkbar die ersten und dritten Ankerzapfen 37,49. Das linke Ende des Winkelhebels 59 ist über einen Stift 61 an dem gegabelten Ende einer Verbindungsstange 60 angelenkt.

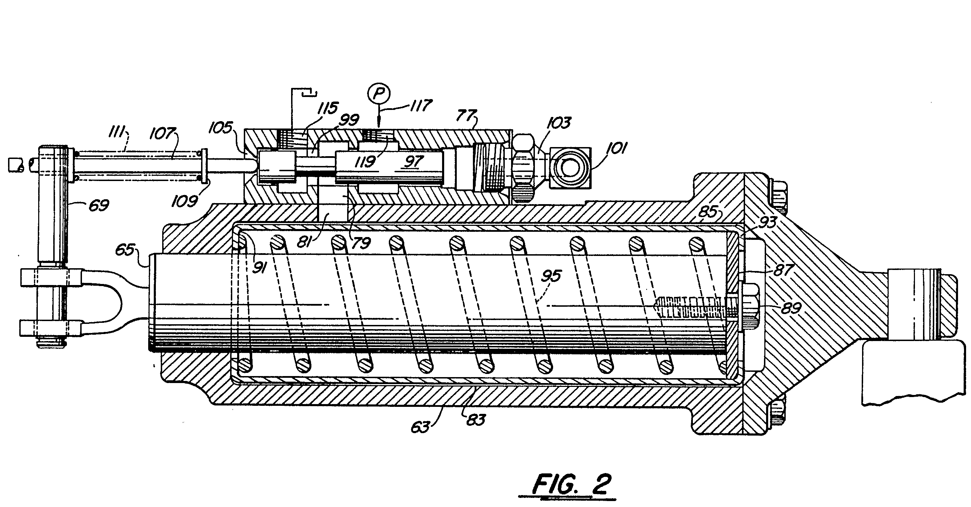

Innerhalb des Gehäuses 13 ist ferner ein Hydraulikzylinder 63 angelenkt, aus dem eine Kolbenstange 65 ragt, deren linkes Ende (Figur 2) gabelförmig ausgebildet ist und einen sich rechtwinklig von der Kolbenstange erstreckenden Zapfen 69 trägt, an dem das eine Ende eines weiteren Hebels 67 angelenkt ist, dessen anderes Ende an einem fest mit dem Gehäuse 13 verbundenen Zapfen 71 schwenkbar gelagert ist. Schließlich ist noch ein Bremsbetätigungshebel 73 vorgesehen, dessen unteres Ende bügelförmig ausgebildet ist und etwa mittig an dem Hebel 67 über einen Zapfen 75 angelenkt ist, während das obere Hebelende mit der Verbindungsstange 60 verschraubt ist.

Es ist erkennbar, daß die Bremsbeaufschlagung durch Einziehen der Kolbenstange 65 in den Hydraulikzylinder 63 erfolgt. Hierdurch wird der Bremsbetätigungshebel 73 verschwenkt, der seinerseits

- 6 -

die Verbindungsstange 60 zusammen mit dem Winkelhebel 59 so weit gegenüber der Halterung 31 verschwenkt, bis der Ankerzapfen 49 gegen die Lagerflächen 51 anliegt, wenn sich die Bremstrommel 17 in der in Figur 1 eingezeichneten Richtung dreht. In dieser Stellung bildet der Ankerzapfen 49 den Drehpunkt für den Winkelhebel 59, der bei seiner Verschwenkung den Ankerzapfen 37 zusammen mit dem keilförmigen Spannstück 33 beaufschlagt und dadurch das Bremsbandende 27 anzieht und so die Bremse betätigt. Dreht sich die Bremstrommel 17 in umgekehrter Richtung, so bildet der Ankerzapfen 37 den Drehpunkt des Winkelhebels 59 gegenüber der Halterung 31; der Ankerzapfen 49 bewegt sich dann von den Lagerflächen 51 weg und bewirkt eine Längsverschiebung des Übertragungsgliedes 47, wodurch wiederum das zweite Spannstück 35 die Schlaufe 29 anzieht und so die Bremse betätigt.

Insbesondere Figur 2 zeigt ein mit herkömmlichen Mitteln am Hydraulikzylinder 63 befestigtes wegabhängiges Steuerventil 77, das einen Anschluß 79 aufweist, der mit einem Anschluß 81 des Hydraulikzylinders 63 fluchtet. Durch diese beiden Anschlüsse kann eine unter Druck stehende Hydraulikflüssigkeit in den Zylinderraum 83 des genannten Hydraulikzylinders oder aber aus diesem Zylinderraum herausströmen. Im Zylinderraum 83 ist eine im wesentlichen zylindrische Hülse 85 angeordnet. Die Kolbenstange 65 ist an ihrem in Figur 2 rechts liegenden Ende über einen Bolzen 89 mit einer Ringscheibe 87 verschraubt, die in der Hülse 85 durch nach innen gebogene Hülsenränder 91,93 gehalten ist. Eine Feder 95 umschließt einen Abschnitt der Kolbenstange 65 und stützt sich zwischen einem Hülsenrand 91 und der genannten Ringscheibe 87 ab.

Das wegabhängige Steuerventil 77 umfaßt einen in einer Kammer 99 längsverschieblich gelagerten Steuerschieber 97. Am rechten Ventilende ist eine mit einem Anschluß versehene Verschlußkappe 101 vorgesehen, die über einen Anschluß 103 mit der Ventilkammer 99
in Verbindung steht. Im linken Ventilende ist eine Stößelöffnung 105 vorgesehen, durch die ein Stößel 107 ragt, der mit seinem einen Ende am linken Ende des Steuerschiebers 97 anliegt.
Der Stößel 107 weist einen fest auf ihm montierten Anschlag 109
auf und ist längsverschieblich gelagert in dem Zapfen 69. Eine
Feder 111 umgibt den Stößel 109 und stützt sich zwischen Zapfen69
und Anschlag 109 ab.

Wird ein in der Zeichnung nicht dargestelltes Steuerpedal gedrückt, erzeugt eine nicht dargestellte Einrichtung einen bestimmten Hydraulikdruck, dessen Größe dem Verschiebeweg des Pedals proportional ist. Dieser Hydraulikdruck wird über eine
Leitung 113 und den Anschluß 103 der Verschlußkappe 101 in die
Ventilkammer 99 geleitet und beaufschlagt hier das in Figur 2
rechts liegende Ende des Steuerschiebers 97, der daraufhin so
weit nach links verschoben wird, daß der Anschluß 81 des Hydraulikzylinders 63 über den Anschluß 79 mit dem Sumpfanschluß 115
in Verbindung steht, so daß Hydraulikflüssigkeit aus dem Zylinderraum 63 zum Pumpensumpf fließen kann. Durch den Abfluß von Hydraulikflüssigkeit aus der Zylinderkammer 83 wird es der sich an der
Ringscheibe 87 abstützenden Feder 95 möglich, die Kolbenstange 65
in den Hydraulikzylinder 63 hineinzuziehen und dadurch das Bremssystem in der vorstehend beschriebenen Weise zu beaufschlagen.

Wird das Brems- bzw. Steuerpedal losgelassen, verringert sich entsprechend das Drucksignal, mit dem das rechte Ende des Steuerschiebers 97 beaufschlagt wird. Dadurch kann der unter Federdruck
stehende Stößel 107 den Steuerschieber 97 nach rechts verschieben.
Hierdurch kann nun die unter Hochdruck stehende Hydraulikflüssigkeit von einer nicht dargestellten Pumpe über eine Leitung 117
zum Druckeinlaß 119 des Ventils 77 und von dort durch die Ventilkammer 99 zum Anschluß 79, durch den Anschluß 81 in den Zylinderraum 85 des Hydraulikzylinders 63 strömen. Die hier einströmende,
unter Druck stehende Flüssigkeit beaufschlagt die Ringscheibe 87
und drückt somit die Kolbenstange 65 nach links aus dem Zylinder 63 hinaus und bewirkt dadurch das Lösen der Bremse in der vorstehend beschriebenen Weise.

Aus Figur 2 ist erkennbar, daß die Flüssigkeitsmenge, die in die
Zylinderkammer 85 hinein bzw. aus dieser Kammer herausströmt bzw.
daß als Ergebnis hiervon der Betrag, um den die Kolbenstange 65
aus dem Hydraulikzylinder 63 herausgedrückt bzw. in den Hydraulikzylinder hineingezogen wird, jeweils abhängig sind von der Verschiebung des Steuerschiebers 97 relativ gegenüber dem Anschluß
119 bzw. 115. Umgekehrt ist aber das Maß der Verschiebung des
Steuerschiebers 97 abhängig von einem Kraftgleichgewicht zwischen
dem genannten Drucksignal einerseits und der durch den Stößel 107
aufgebrachten Kraft andererseits. Möchte also der Fahrer eines
Fahrzeugs die Bremsen etwas lösen, braucht er nur das genannte
Drucksignal etwas zu verringern. Die auf den Stößel 107 und damit
gegen das linke Ende des Steuerschiebers 97 wirkende Federkraft
unterbricht dann die Verbindung zwischen Anschluß 81 und
Anschluß 115 und stellt statt dessen eine Verbindung her zwischen
den Anschlüssen 81 und 119, worauf dann die Kolbenstange 65 verschoben wird. Wird das Drucksignal weiter verringert, wird die
Kolbenstange 65 weiter um ein vergleichbares Maß verschoben.

Gr/Gru.

# Patentanwälte GRAMM + LINS

Dipl.-Ing. Prof. Werner Gramm
Dipl. **0050808**

D-3300 Braunschweig

DEERE & COMPANY
Moline, Illinois 61265
U S A

Telefon:       (05 31) 8 00 79
Telex:         09 52 620

Anwaltsakte   324-25 EP-1
Datum         15.10.1981

Patentansprüche:

1. Wegabhängiges Steuerventil (77) in Kombination mit einem Hydraulikzylinder (63), gekennzeichnet durch folgende Merkmale:

   a) Durch einen im Steuerventil (77) verschiebbar angeordneten Steuerschieber (97) wird eine Strömungsverbindung ganz oder teilweise hergestellt bzw. unterbunden zwischen einem Anschluß (79,81) am Hydraulikzylinder (63) und einem Druckeinlaß (119) oder aber mit einem Ölsumpfanschluß (115) am Steuerventil;

   b) eine erste Verstelleinrichtung beaufschlagt den Steuerschieber(97) in einer Richtung mit einer wählbaren Kraft;

   c) eine zweite Verstelleinrichtung (107,111) beaufschlagt den Steuerschieber (97) mit einer der ersten Verstelleinrichtung entgegengerichteten Kraft, deren Größe von der jeweiligen Verschiebestellung der Kolbenstange (65) des Hydraulikzylinders (63) abhängig ist.

- 2 -

2. Steuerventil nach Anspruch 1, bei dem die genannte zweite Verstelleinrichtung (107,111) aus folgenden Merkmalen besteht:

   a) Ein parallel zur Kolbenstange (65) des Hydraulikzylinders (63) angeordneter Stößel (107) liegt an einem der ersten Verstelleinrichtung gegenüberliegenden Ende des Steuerschiebers (97) an;

   b) der Stößel (107) ist längsverschieblich geführt in einem Bolzen (69), der angenähert rechtwinklig mit der Kolbenstange (65) des Hydraulikzylinders (63) verbunden ist;

   c) auf dem Stößel (107) ist ein Anschlag (109) vorgesehen;

   d) der Stößel (107) ist von einer Feder (111) umschlossen, die sich zwischen dem genannten Bolzen (69) und dem genannten Anschlag (109) abstützt.

3. Steuerventil nach Anspruch 1 oder 2, dadurch gekennzeichnet, daß die erste Verstelleinrichtung einen Druck auf das eine Ende des Steuerschiebers (97) übermittelt.

4. Steuerventil nach Anspruch 1, 2 oder 3, dadurch gekennzeichnet, daß die Kolbenstange (65) des Hydraulikzylinders (63) gegen die Wirkung einer Feder (95) verschiebbar und mit einem Steuergestänge (45) verbunden ist, das eine Bandbremse (11) beaufschlagt, wobei das Steuergestänge (45) in seiner gelösten Bremsstellung die beiden Enden (23,25) eines eine Bremstrommel (17) umschlingenden Bremsbandes (21) so weit voneinander entfernt hält, daß das Bremsband von der Bremstrommel abhebt, während das Steuergestänge (45) in sei-

0050808

- 3 -

ner angezogenen Bremsstellung die Enden (23,25) des Bremsbandes (21) dichter zusammenzieht.

Patentanwälte
G r a m m  +  L i n s
Gr/Gru.

FIG. 1

1/2

0050808

**FIG. 2**

0050808

2/2

Europäisches
Patentamt

EUROPÄISCHER RECHERCHENBERICHT

0050808
Nummer der Anmeldung

EP 81108400.3

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe. soweit erforderlich. der maßgeblichen Teile | betrifft Anspruch | |
| | DE - B2 - 1 655 103 (S.A.D.E. VEHICULES INDUSTRIELS ET D'EQUI-PEMENTS MECHANIQUES SAVIEM) <br><br> * Spalte 4, Zeilen 8-11, 60-63; Spalte 5, Zeilen 2-8 * <br><br> -- <br><br> DE - B - 1 812 309 (STEYR-DAIMLER PUCH AG) <br><br> * Spalte 1, Zeilen 5-20 * <br><br> -- | 1a,b,c <br><br><br><br><br><br><br><br> 1a,b,3 | B 60 T 13/22 |
| A | DE - A - 2 422 045 (FIAT-ALLIS CONSTURCTION MACHINERY, INC.) <br><br> * Fig. BZ 54, 63, 116, 118 * <br><br> ---- | 1,4 | RECHERCHIERTE SACHGEBIETE (Int. Cl.³) <br><br> B 60 T 13/00 <br> F 15 B 13/00 <br> F 15 B 15/00 <br> F 16 D 49/00 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie. übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 18-01-1982 | BAUMGARTNER |

EPA form 1503.1   06.78